# EUROPEAN PATENT SPECIFICATION

(11) **EP 3 653 335 B1**
(45) Date of publication and mention of the grant of the patent: **19.10.2022**
(21) Application number: 19207484.7
(22) Date of filing: 06.11.2019
(51) Int. Cl.: B23Q 7/04

(54) **MACHINE TOOL INCLUDING A LOADING DEVICE**
WERKZEUGMASCHINE MIT LADEVORRICHTUNG
MACHINE-OUTIL COMPRENANT UN DISPOSITIF DE CHARGEMENT

(30) Priority: 14.11.2018 JP 2018213360
(43) Date of publication of application: 20.05.2020
(73) Proprietor: Nakamura-Tome Precision Industry Co., Ltd., Ishikawa 920-2195 (JP)
(72) Inventor: TANIO, Hiroki, Hakusan, Ishikawa 920-2195 (JP)
(74) Representative: Wunderlich & Heim Patentanwälte Partnerschaftsgesellschaft mbB

(56) References cited:
- EP-A1- 2 913 146
- WO-A1-2014/069274
- JP-A- 2000 153 425
- US-A- 4 345 866

## Description

### BACKGROUND

The present invention relates to a machine tool with a loading device.

A machine tool, such as a lathe or a composite processing machine, includes a loading device, such as a gantry loader, for carrying a workpiece to be processed in and out from this machine tool.

In general, each of these loading devices is formed of an arm that includes a loader traveling along a Z axis rail disposed to extend across the upper portion of the machine tool, and that moves upward and downward in a Y axis direction. Accordingly, there is a problem that the structure of the loading device is increased in size, and a long movement cycle time for a workpiece is also required.

For example, JP-A-10-193237 discloses a machine tool provided with an on-machine loading device for reversing and delivering a workpiece to a first NC lathe, that performs processing on the front surface of the workpiece, and to a second NC lathe that performs processing on the rear surface of the workpiece. The on-machine loading device includes a rail portion disposed to extend across the upper portions of two NC lathes, and a hand unit that travels along the rail portion. The hand unit includes a loading hand and an unloading hand, and a workpiece is reversed and delivered between the loading hand and the unloading hand. Accordingly, the loading hand and the unloading hand are moved to approach or separate each other.

However, in this loading device, because of the reversing and delivering of a workpiece to be performed, it is necessary to move the loading hand and the unloading hand to approach or separate each other. Accordingly, the loading device per se is increased in size. Further, the machine tool that includes this loading device is configured such that the hand unit travels along the rail portion disposed to extend across the upper portions of the two NC lathes so that the structure is increased in size. Further, to deliver a workpiece between the first NC lathe and the second NC lathe, the workpiece is reversed and transferred between the loading hand and the unloading hand, thus causing a problem that the workpiece delivery cycle is long.

Different kinds of machine tools with loading or discharge mechanisms are for example disclosed in JP 2000 153425 A, EP 2 913 146 A1 and US 4345866 A.

WO 2014/069274 A1 discloses a machine tool comprising a loading device wherein the loading device comprising:a rail portion; and a loader configured to travel along the rail portion along a first horizontal axis, wherein the loader includes a pivoting portion, and an arm portion, and the arm portion includes a hand portion that holds a workpiece, wherein the machine tool further comprising a processing region for a workpiece, and a stocker portion for the workpiece, and the rail portion is disposed so as to straddle the processing region and the stocker portion wherein the hand portion includes a first hand and a second hand, a main spindle is provided in the processing region, the first hand holds a processed workpiece received from the main spindle so as to deliver to the stocker portion, and the second hand holds a workpiece received from the stocker portion so as to deliver to the main spindle and wherein the first hand and the second hand are attached to the hand portion in a pivotable manner by 90° about a horizontal axis.

### SUMMARY

It is an object of the invention to provide a machine tool with a loading device having a compact structure and that is effective for shortening the process cycle time.

According to one aspect of the invention, there is provided a machine tool as defined in claim 1.

In a machine tool according to the invention, a loader that travels along a rail includes a pivoting portion, and an arm portion that extends and contracts with respect to the pivoting portion, and a hand portion provided to the arm portion can deliver a workpiece to a desired position. Accordingly, the loadinq device has a compact structure. Further, in delivering a workpiece, it is unnecessary to deliver the workpiece in the hand unit unlike the case disclosed in JP-A-10-193237 and hence, the delivery cycle is shortened.

Note that the inside of the machine tool refers to the inside of a cover or the like that surrounds a processing region including the headstock and the tool rest.

The loading device that is reduced in size and in which the delivery cycle for a workpiece is shortened is disposed in the machine tool so that the machine tool is reduced in size and hence, throughput is enhanced.

In accordance with one of some embodiments, the machine tool may comprise a processing region for a workpiece, and a stocker portion for the workpiece, and
the rail portion is disposed so as to straddle the processing region and the stocker portion.

Further, the machine tool includes the stocker portion for a workpiece therein so that a continuous processing operation can also be easily performed.

In accordance with one of some embodiments, there is provided the machine tool, wherein
the main spindle may include a first main spindle and a second main spindle,
the first hand holds the workpiece received from the stocker portion so as to deliver to the first main spindle, the second hand holds a processed workpiece received from the second spindle to deliver to the stocker portion, and the first hand delivers the workpiece to the first main spindle that is vacant due to transfer of the workpiece processed on the first main spindle to the second main spindle.

With such a configuration, a plurality of workpieces, such as an unprocessed workpiece (material) and a processed workpiece (semi-finished product or finished product), can be held simultaneously, or one workpiece can be selectively transferred so that the process cycle can be shortened.

In accordance with one of some embodiments, there is provided the machine tool, wherein the processing region and the stocker portion may be partitioned by a shutter opening and closing of which are controlled.

With such a configuration, it is possible to prevent chips and the like generated in the processing region from scattering to the outside of an area.

In accordance with one of some embodiments, there is provided the machine tool, wherein the stocker portion may include a carry-in and carry-out member for a workpiece.

For example, a roller convey having a plurality of rollers, a belt conveyor or the like is provided so as to allow a workpiece to be continuously charged into or to be continuously carried out from the stocker portion in the machine too. With such a configuration, automatic operation of continuous processing for a workpiece can also be performed.

In accordance with one of some embodiments, there is provided the machine tool, wherein the arm portion may include a mounting member on which at least one attachment is mounted.

At least one attachment may be, for example, an attachment, such as a maintenance air nozzle or a washing nozzle, an instrument attachment for measuring a processing size or the like of a workpiece, or an additional processing attachment, such as a welding torch or the like.

With such an attachment, various functions can also be incorporated into the machine tool.

### BRIEF DESCRIPTION OF THE DRAWINGS

FIG. 1 is a view illustrating an example of a machine tool that includes a loading device according to the invention therein;
FIG. 2A and FIG. 2B illustrate an example of the structure of a loader, and FIG. 2A is a view illustrating a pivot state of a pivoting portion, and FIG. 2B is a view illustrating a state where an arm portion extends in the pivot state illustrated in FIG. 2A;
FIG. 3A and FIG. 3B are views illustrating an example where a first hand and a second hand provided to a hand portion are pivoted so as to switch to a usable state;
FIG. 4 is a view illustrating a state where the loader is positioned at a stocker portion for a workpiece;
FIG. 5 is a view illustrating a state where the loader is loading the workpiece;
FIG. 6 is a view illustrating a state where the loader takes a finished product P₂ from a second main spindle;
FIG. 7 is a view illustrating a state where the loader moves toward a first main spindle;
FIG. 8 is a view illustrating a state where the second main spindle takes a semi-processed product P₁ from the first main spindle;
FIG. 9 is a view illustrating a state where the loader delivers a workpiece W, that is a material, to the first main spindle;
FIG. 10 is a view illustrating a state where the loader moves a finished product to the stocker portion; and
FIG. 11 is a view illustrating a state where the loader unloads the finished product to the stocker portion.

### DESCRIPTION OF EXEMPLARY EMBODIMENTS

The following disclosure provides many different embodiments, or examples, for implementing different features of the provided subject matter. These are, of course, merely examples and are not intended to be limiting. In addition, the disclosure may repeat reference numerals and/or letters in the various examples. This repetition is for the purpose of simplicity and clarity and does not in itself dictate a relationship between the various embodiments and/or configurations discussed. Further, when a first element is described as being "connected" or "coupled" to a second element, such description includes embodiments in which the first and second elements are directly connected or coupled to each other, and also includes embodiments in which the first and second elements are indirectly connected or coupled to each other with one or more other intervening elements in between.

Exemplary embodiments are described below. Note that the following exemplary embodiments do not in any way limit the scope of the content defined by the claims laid out herein. Note also that all of the elements described in the present embodiment should not necessarily be taken as essential elements

The description will be made, with reference to drawings, with respect to an example where a loading device 10 according to one embodiment of the invention is incorporated in a machine tool.

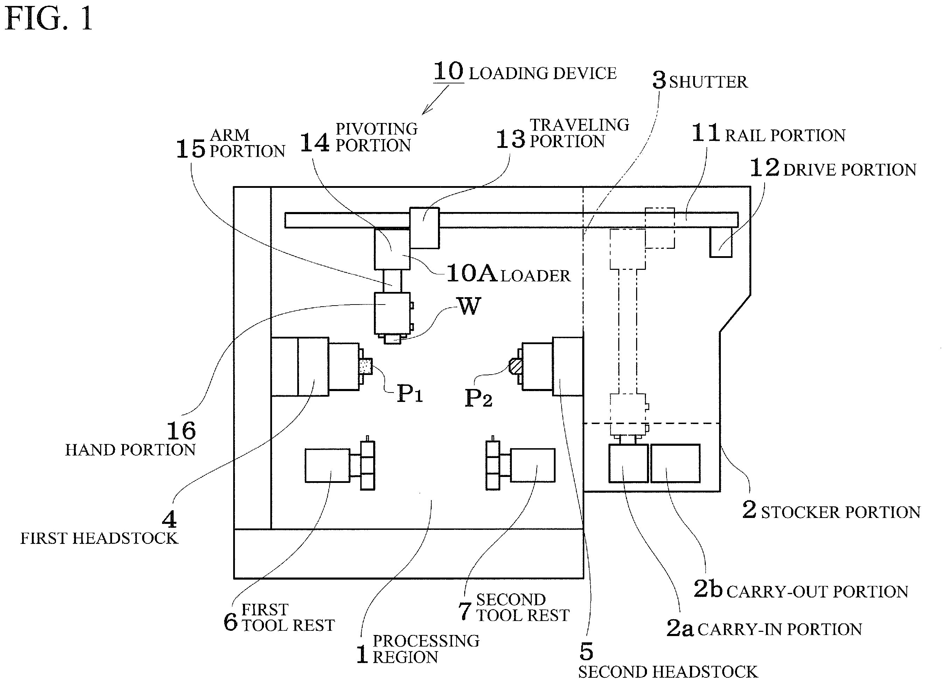

In FIG. 1, a machine tool includes a processing region 1 and a stocker portion 2 therein, the inside of the machine tool being surrounded by a cover. Headstocks and tool rests are provided in the processing region 1 illustrated in FIG. 1. FIG. 1 illustrates, as an example of the machine tool, a composite processing machine where a first headstock 4 and a second headstock 5 are disposed to oppose each other in a Z axis direction, each of the first headstock 4 and the second headstock 5 being capable of holding a workpiece W and controlling the rotation of the workpiece W. However, the machine tool is not limited to such a composite processing machine.

Further, FIG. 1 illustrates a machine tool of a two-turret type that includes a first tool rest 6 and a second tool rest 7. However, the structure, the arrangement and the like of the tool rest are also not limited to the above.

In the machine tool, the processing region 1 and the stocker portion 2 are partitioned by a shutter 3, the opening and closing of which are controlled.

The stocker portion 2 includes, on the bottom portion side thereof, a carry-in portion 2a for a workpiece (material) W and a carry-out portion 2b for a finished product P₂ where processing is finished.

Although not illustrated in the drawing, the carry-in portion 2a and the carry-out portion 2b are provided with a belt conveyor that is disposed on the right side in FIG. 1 and that extends along the depth direction of the machine tool. A plurality of workpieces W placed on the belt conveyor are automatically carried in, and finished products P₂ where processing is finished are carried out by the belt conveyor.

The loading device 10 is disposed in the machine tool at the upper portion of the machine tool, a rail portion 11, on which a loader 10A travels, being attached to the loading device 10 over the entire length of the processing region 1 and the stocker portion 2.

The loader 10A is allowed to travel along this rail 11 portion by a drive portion 12, that is servo controlled, for example.

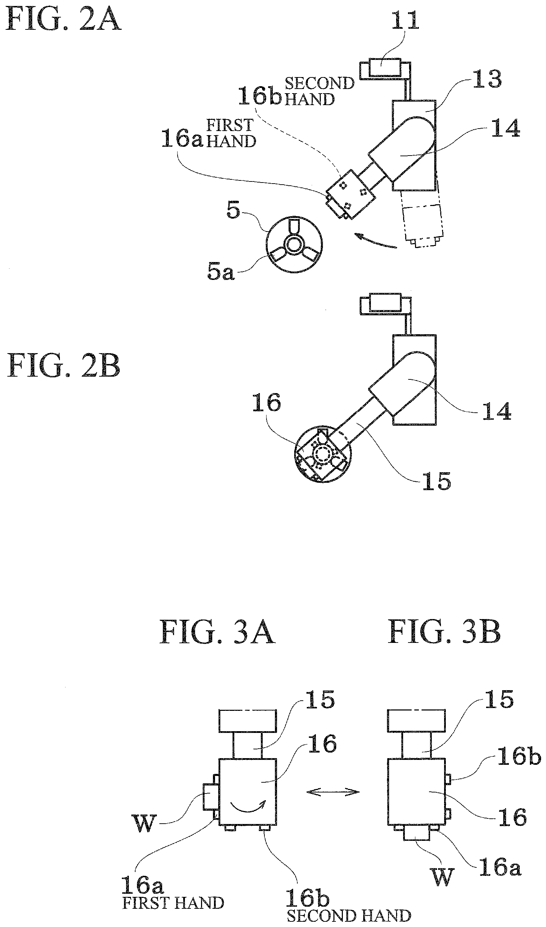

The loader 10A includes a traveling portion 13 that travels along the rail portion 11, and a pivoting portion 14 that is attached to the side surface of the traveling portion 13. The pivoting portion 14 is pivotable with respect to the traveling portion 13 as illustrated in FIG. 2A.

The pivoting portion 14 includes an arm portion 15 that is capable of extending and contracting, and includes a hand portion 16 for hand holding a workpiece at the distal end portion of this arm portion 15. FIG. 2A illustrates a contracted state of the arm portion 15, and FIG. 2B illustrates an extended state of the arm portion 15.

Further, as illustrated in FIG. 3A and FIG. 3B, a first hand 16a and a second hand 16b are attached to the hand portion 16 in a pivotable manner by 90°. Each of the first hand 16a and the second hand 16b is formed of an openable three-point gripping claw, and grips a workpiece W or the like.

Provided that the hand portion 16 can hold an unprocessed workpiece W, a processed semi-finished product P₁, or a finished product P₂, the structure and the number of hand portions 16 are not limited.

With such a configuration, as illustrated in FIG. 2A, for example, after the workpiece W is handled by the second hand 16b provided on the depth side of the paper, the pivoting portion 14 pivots in a direction toward the second headstock 5 and, thereafter or in synchronization with such pivoting, the arm portion 15 extends as illustrated in FIG. 2B so that the workpiece W can be delivered to a chuck portion 5a of the second headstock 5.

Next, an example of automatically operated processing procedure will be described.

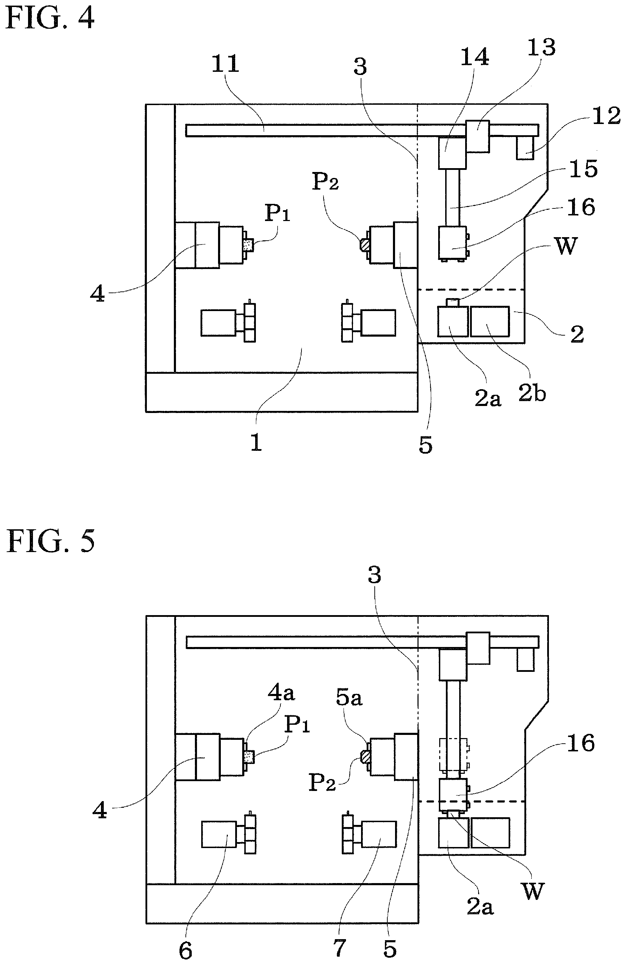

As illustrated in FIG. 4, the loader 10A moves to the stocker portion 2 and the arm portion 15 extends so that the hand portion 16 moves to take a workpiece W that is carried in from the carry-in portion 2a.

The shutter 3 is in a closed state in this step.

As illustrated in FIG. 5, when the hand portion 16 approaches the workpiece W, speed of the hand portion 16 is reduced, and the position of the workpiece W is sensed by a sensor or the like so that the workpiece W is chucked and held by the first hand 16a, for example.

During such operations, a workpiece that is chucked by a chuck portion 4a of the first headstock 4 is formed into a semi-finished product P₁ that is partially mechanically processed at the first tool rest 6, and a semi-finished product that is chucked by the chuck portion 5a of the second headstock 5 is processed into a finished product P₂ (see FIG. 5).

Next, the hand portion 16 elevates, and the shutter 3 is opened and, then, the loader 10A moves to a portion obliquely above and on the depth side of the chuck portion 5a of the second headstock 5.

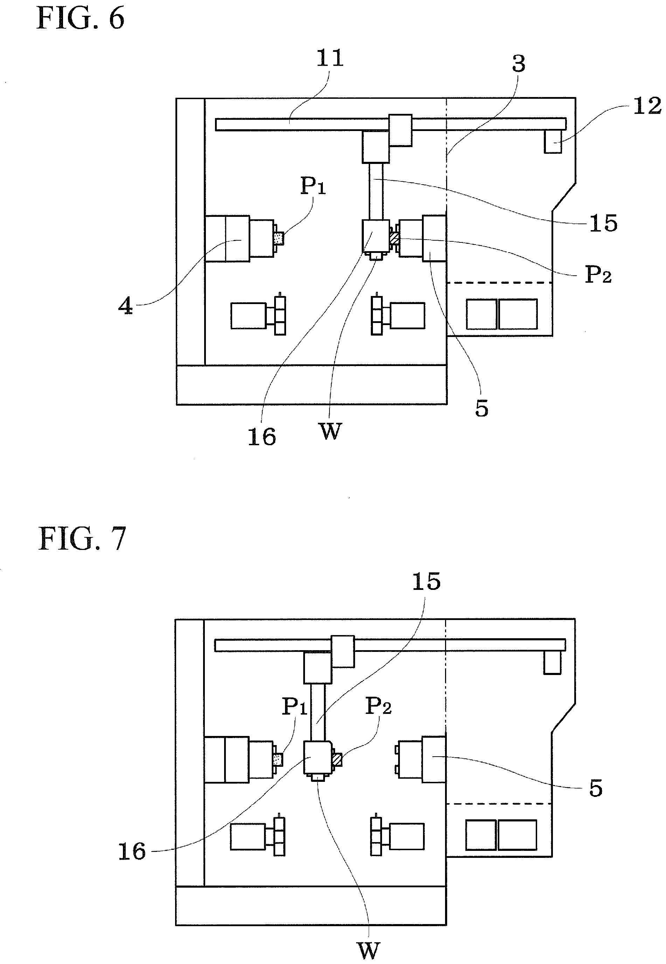

Next, as illustrated in FIG. 2A and FIG. 2B, the pivoting portion 14 pivots and the arm portion 15 extends so that the second hand 16b holding no workpiece W and thus being vacant receives the finished product P₂, where processing is completed, from the second headstock 5 (see FIG. 6).

After the hand portion 16 that receives the finished product P₂, the pivoting portion 14 temporarily pivots in a depth direction so as to retract. FIG. 7 illustrates a state after the pivoting portion 14 pivots in the depth direction so as to retract, and the traveling portion 13 moves toward the first headstock 4 along the rail portion 11.

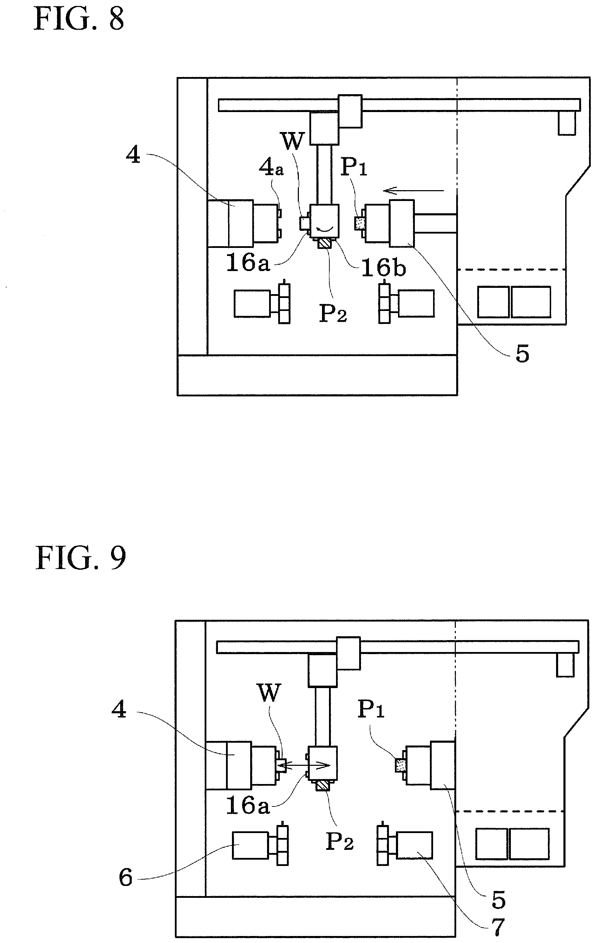

During the movement illustrated in FIG. 7, as illustrated in FIG. 8, the second headstock 5 moves forward in the Z axis direction toward the first headstock 4, and takes the semi-finished product P₁ that is partially processed at the first headstock 4. FIG. 9 shows that the loader 10A returns to the initial position where the loader 10A faces to the first second headstock 4.

The chuck portion 4a of the first headstock 4 becomes vacancy so that, the hand portion 16 pivots by 90° as illustrated in FIG. 8, and delivers a workpiece W gripped by the first hand 16a to the first headstock 4 side as illustrated in FIG. 9.

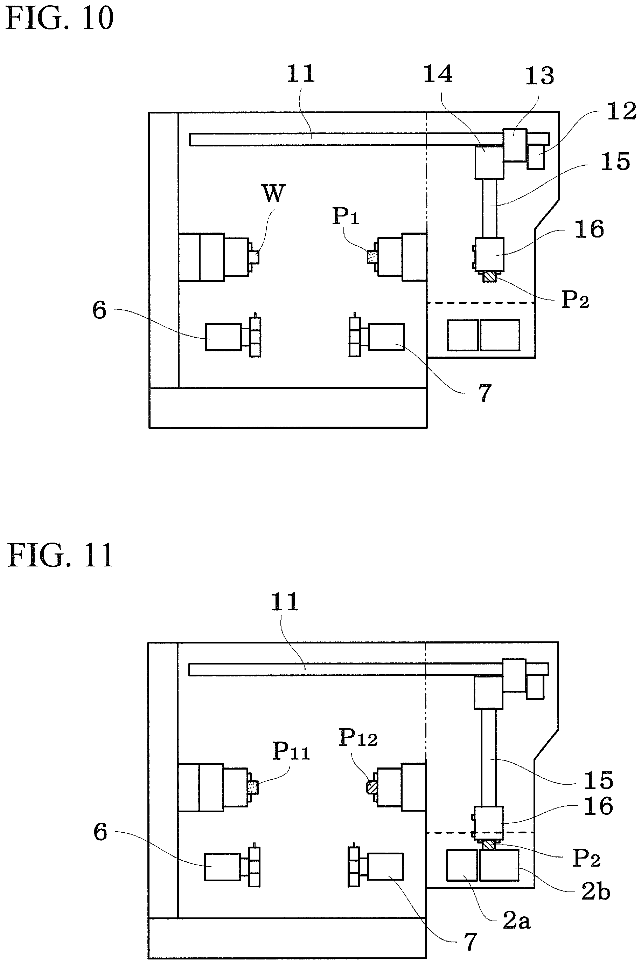

After the loader 10A delivers the workpiece W to the first headstock 4, the shutter 3 is opened so that the loader 10A moves to the stocker portion 2 as illustrated in FIG. 10, and delivers the finished product P₂ to the carry-out portion 2b as illustrated in FIG. 11.

The machine tool according to the invention is not limited to the above, and is applicable to various machine tools.

The above-mentioned various attachments may be attached to the hand portion 16.

## Claims

1. A machine tool comprising a loading device (10) wherein the loading device comprising:
a rail portion (11); and a loader (10A) configured to travel along the rail portion along a first horizontal axis, wherein
the loader includes a pivoting portion (14), and an arm portion (15) extending and contracting with respect to the pivoting portion, and
the arm portion includes a hand portion (16) that holds a workpiece (W), wherein the machine tool further comprising a processing region (1) for a workpiece, and a stocker portion (2) for the workpiece, and
the rail portion is disposed so as to straddle the processing region and the stocker portion wherein
the hand portion includes a first hand (16a) and a second hand (16b),
a main spindle is provided in the processing region,
the first hand (16a) holds a processed workpiece received from the main spindle so as to deliver to the stocker portion, and the second hand (16b) holds a workpiece received from the stocker portion so as to deliver to the main spindle and
wherein the first hand and the second hand are attached to the hand portion (16) in a pivotable manner by 90° about a horizontal axis orthogonal to the first horizontal axis in a plan view.

2. The machine tool according to claim 1, wherein
the main spindle includes a first main spindle (4) and a second main spindle (5),
the first hand holds the workpiece received from the stocker portion so as to deliver to the first main spindle, the second hand holds a processed workpiece received from the second spindle to deliver to the stocker portion, and the first hand delivers the workpiece to the first main spindle that is vacant due to transfer of the workpiece processed on the first main spindle to the second main spindle.

3. The machine tool according to claim 1 or 2 wherein the processing region and the stocker portion are partitioned by a shutter (3), opening and closing of which are controlled.

4. The machine tool according to any one of claims 1 to 3, wherein the stocker portion includes a carry-in (2a) and carry-out (2b) member for a workpiece.

5. The machine tool according to any one of claims 1 to 4, wherein the arm portion includes a mounting member on which at least one attachment is mounted.

## Patentansprüche

1. Eine Werkzeugmaschine mit einem Bestückungsgerät (10),
wobei das Bestückungsgerät umfasst:
ein Schienenteil (11); und einen Belader (10A), der konfiguriert ist, entlang des Schienenteils entlang einer ersten horizontalen Achse zu fahren, wobei
der Belader ein Schwenkteil (14) und ein Armteil (15) enthält, das in Bezug auf das Schwenkteil ausfahren und sich zurückziehen kann, und
das Armteil ein Handteil (16) enthält, das ein Werkstück (W) hält,
wobei die Werkzeugmaschine ferner einen Bearbeitungsbereich (1) für ein Werkstück und einen Einlagerungsabschnitt (2) für das Werkstück umfasst, und
das Schienenteil so angeordnet ist, dass es den Bearbeitungsbereich und den Einlagerungsabschnitt überspannt, wobei
das Handteil eine erste Hand (16a) und eine zweite Hand (16b) aufweist, eine Hauptspindel in dem Bearbeitungsbereich vorgesehen ist,
die erste Hand (16a) ein bearbeitetes Werkstück hält, das von der Hauptspindel empfangen wurde, um es an den Einlagerungsabschnitt zu liefern, und die zweite Hand (16b) ein Werkstück hält, das von dem Einlagerungsabschnitt empfangen wurde, um es an die Hauptspindel zu liefern, und
wobei die erste Hand und die zweite Hand an dem Handteil (16) in einer um 90° schwenkbaren Weise um eine horizontale Achse angebracht sind, die in der Draufsicht orthogonal zur ersten horizontalen Achse verläuft.

2. Werkzeugmaschine nach Anspruch 1, wobei
die Hauptspindel eine erste Hauptspindel (4) und eine zweite Hauptspindel (5) umfasst,
die erste Hand das von dem Einlagerungsabschnitt empfangene Werkstück hält, um es an die erste Hauptspindel zu liefern, die zweite Hand ein bearbeitetes Werkstück hält, das von der zweiten Spindel empfangen wurde, um es an den Einlagerungsabschnitt zu liefern, und die erste Hand das Werkstück an die erste Hauptspindel liefert, die, aufgrund der Übertragung des auf der ersten Hauptspindel bearbeiteten Werkstücks an die zweite Hauptspindel, unbesetzt ist.

3. Werkzeugmaschine nach Anspruch 1 oder 2, wobei der Bearbeitungsbereich und der Einlagerungsabschnitt durch eine Klappe (3) abgetrennt sind, dessen Öffnen und Schließen gesteuert wird.

4. Werkzeugmaschine nach einem der Ansprüche 1 bis 3, wobei der Einlagerungsabschnitt ein Hinein- (2a) und Heraustragungsorgan (2b) für ein Werkstück umfasst.

5. Werkzeugmaschine nach einem der Ansprüche 1 bis 4, wobei der Armteil ein Befestigungsorgan umfasst, an dem mindestens ein Zubehörteil befestigt ist.

## Revendications

1. Machine-outil comprenant un dispositif de chargement (10) dans laquelle le dispositif de chargement comprend :
une partie rail (11) ; et une chargeuse (10A) configurée pour se déplacer le long de la partie rail le long d'un premier axe horizontal, dans laquelle
la chargeuse comporte une partie pivotante (14), et une partie bras (15) s'étendant et se contractant par rapport à la partie pivotante, et
la partie bras comporte une partie main (16) qui tient une pièce à travailler (W),
dans laquelle la machine-outil comprend en outre une région de traitement (1) pour une pièce à travailler, et une partie de stockage (2) pour la pièce à travailler, et
la partie rail est disposée de manière à enjamber la région de traitement et la partie de stockage dans laquelle
la partie main comporte une première main (16a) et une seconde main (16b),
une broche principale est disposée dans la région de traitement,
la première main (16a) tient une pièce à travailler traitée reçue depuis la broche principale pour distribution à la partie de stockage, et la seconde main (16b) tient une pièce à travailler reçue depuis la partie de stockage pour distribution à la broche principale et
dans laquelle la première main et la seconde main sont fixées à la partie main (16) de manière à pouvoir pivoter de 90° autour d'un axe horizontal orthogonal au premier axe horizontal sur une vue en plan.

2. Machine-outil selon la revendication 1, dans laquelle
la broche principale comporte une première broche principale (4) et une seconde broche principale (5),
la première main tient la pièce à travailler reçue depuis la partie de stockage pour distribution à la première broche principale, la seconde main tient une pièce à travailler traitée reçue depuis la seconde broche pour distribution à la partie de stockage, et la première main distribue la pièce à travailler à la première broche principale qui est libre en raison du transfert de la pièce à travailler traitée sur la première broche principale vers la seconde broche principale.

3. Machine-outil selon la revendication 1 ou 2, dans laquelle la région de traitement et la partie de stockage sont séparées par un obturateur (3), dont l'ouverture et la fermeture sont commandées.

4. Machine-outil selon l'une quelconque des revendications 1 à 3, dans laquelle la partie de stockage comporte un organe de transport entrant (2a) et un organe de transport sortant (2b) pour une pièce à travailler.

5. Machine-outil selon l'une quelconque des revendications 1 à 4, dans laquelle la partie bras comporte un organe de montage sur lequel est monté au moins un accessoire.
